# EUROPEAN PATENT SPECIFICATION

(11) **EP 1 591 297 B1**
(45) Date of publication and mention of the grant of the patent: **08.08.2007**
(21) Application number: 05008412.8
(22) Date of filing: 18.04.2005
(51) Int. Cl.: B60K 28/14, F02D 41/30, B60R 21/01

(54) **Fuel supply control apparatus for vehicle engine and method thereof**
Vorrichtung und Verfahren zur Steuerung der zugeführten Brennstoffmenge der Brennkraftmaschine eines Kraftfahrzeugs
Dispositif de commande d'alimentation en carburant de moteur automobile et procédé correspondant

(30) Priority: 26.04.2004 JP 2004129270
(43) Date of publication of application: 02.11.2005
(73) Proprietor: Hitachi, Ltd., Tokyo (JP)
(72) Inventor: Hosoya, Hajime c/o Automotive Systems, Hitachi Ltd, Isesaki-shi Gunma-ken, 372-0023 (JP)
(74) Representative: Grünecker, Kinkeldey, Stockmair & Schwanhäusser Anwaltssozietät

(56) References cited:
- DE-A1- 10 115 865
- US-A1- 2002 103 590
- US-A1- 2003 139 866

## Description

### BACKGROUND OF THE INVENTION

### 1. Field of the Invention

The present invention relates to a fuel supply control apparatus for a vehicle engine and a method thereof, and in particular, relates to a control technology at the time of vehicle collision.

### 2. Description of the Related Art

In a fuel supply apparatus for a vehicle engine disclosed in Japanese Unexamined Patent Publication No. 07-189842, a discharge amount of a high pressure pump is limited when a trigger switch of an airbag is operated. As a result, the fuel outflow can be prevented.

However, the trigger switch is operated only at the time of head-on collision or lateral collision against a vehicle, and accordingly, there is a limit in a range where the trigger switch is operated.

Therefore, in a system where the discharge amount of the pump is limited when the trigger switch is operated, sometimes, the processing of limiting the discharge amount of the pump is not executed depending on directions of the collision or the collision strength.

Accordingly, in the related art, there has been a problem in that the fuel outflow cannot be reliably prevented.

DE 101 15 865 A1 according to the preambles of claims 1, 3, 10 and 11 discloses a fuel supply control apparatus and a fuel supply control method for a vehicle engine comprising a crash sensor connected to a control means. The crash sensor is an acceleration sensor detecting accelerations in different directions including a backward collision. In case a collision is detected by the crash sensor, the supply of fuel to the engine is cut off

US 2003/139866 A1 discloses a main controller using sensor data of different sensors for detection of a collision. In case a rear impact is detected, the fuel is cut off.

### SUMMARY OF THE INVENTION

It is an object of the present invention to prevent the fuel outflow from a fuel supply system even at the time of collision where an airbag is not operated.

This object is solved by the features of claims 1, 3,10 and 11. Further embodiments are laid down in the subclaims.

### BRIEF DESCRIPTION OF THE DRAWINGS

Fig. 1 is a diagram showing a fuel supply apparatus for a vehicle engine in an embodiment of the present invention.
Fig. 2 is a flowchart showing a first embodiment of the fail-safe process according to the present invention.
Fig. 3 is a flowchart showing a second embodiment of the fail-safe process according to the present invention.

### PREFERRED EMBODIMENT

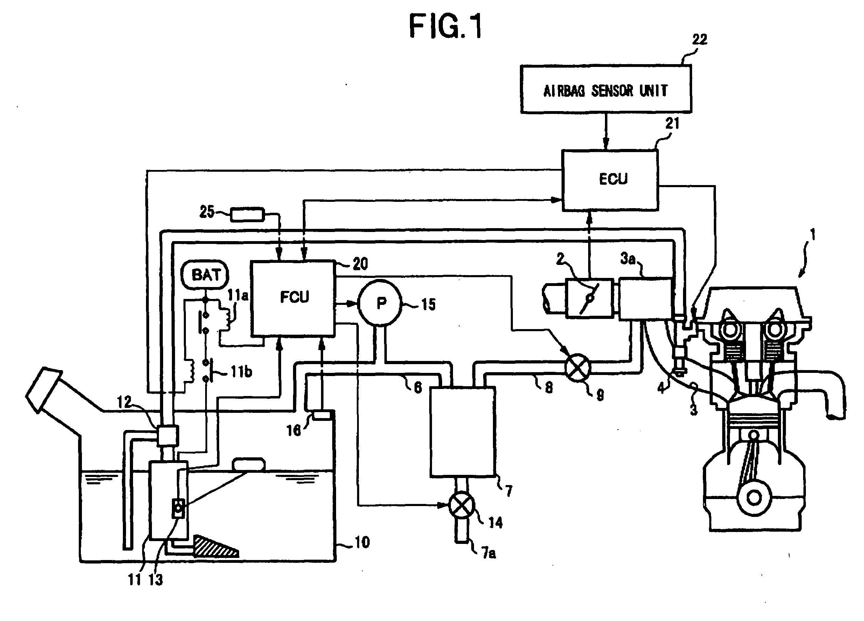

Fig. 1 is a diagram showing a fuel supply apparatus for a vehicle engine in an embodiment of the present invention.

In FIG. 1, an internal combustion engine 1 is a gasoline engine installed in a vehicle (not shown in the figure).

A throttle valve 2 is disposed in an intake system of engine 1.

An intake air amount of engine 1 is controlled based on an opening of throttle valve 2.

In an intake pipe 3 on the downstream side of throttle valve 2, an electromagnetic fuel injection valve 4 is disposed for each cylinder.

Further, a fuel vapor purge system is disposed to engine 1.

The fuel vapor purge system includes a fuel vapor passage 6, a canister 7, a purge passage 8 and a purge control valve 9.

The fuel vapor generated in a fuel tank 10 is introduced into canister 7 via fuel vapor passage 6, to be adsorbed to the activated carbon in canister 7.

A new air inlet port 7a is formed to canister 7. Further, purge passage 8 is led out from canister 7.

Purge passage 8 is connected to an intake collector section 3a on the downstream of throttle valve 2.

Purge control valve 9 is disposed in the halfway of purge passage 8.

When a purge permission condition is established during an operation of engine 1 and purge control valve 9 is controlled to open, an intake negative pressure of engine 1 acts on canister 7.

When a pressure in canister 7 becomes negative, the fresh air is Introduced through new air inlet port 7a, and the fuel vapor adsorbed to the activated carbon is purged.

Then, purged gas inclusive of the fuel vapor purged from the activated carbon passes through purge passage 8 to be sucked into intake collector section 3a, and thereafter, is burned within a combustion chamber of engine 1.

To fuel injection valve 4, fuel is supplied by a fuel pump 11 incorporated in fuel tank 10.

On the downstream of fuel pump 11, a pressure regulator 12 is disposed, for regulating a fuel return amount to fuel tank 10 to regulate a fuel supply pressure to fuel injection valve 4.

Further, there is disposed a fuel level gauge 13 for detecting a fuel level in fuel tank 10.

Moreover, in order to diagnose whether or not the leakage occurs in the fuel vapor purge system, there are disposed a cut valve 14 for opening/closing intake air inlet port 7a of canister 7, an air pump 15 for sending the air into fuel vapor passage 6 and a tank internal pressure sensor 16 for detecting a pressure in fuel tank 10.

Then, when the leakage diagnosis is performed, firstly, purge control valve 9 and cut valve 14 are closed, so that a diagnosis section including fuel tank 10, fuel vapor passage 6, canister 7 and purge passage 8 on the upstream of purge control valve 9 is shielded.

Next, the diagnosis section is pressurized by supplying the air by air pump 15.

Then, it is diagnosed whether or not the leakage occurs, based on a pressure change in fuel tank 10 due to the pressurization by air pump 15 and/or the pressure change in fuel tank 10 after the pressurization by air pump 15 has been stopped.

Note, it is possible to perform the leakage diagnosis based on the pressure change in fuel tank for when the diagnosis section is depressurized.

Further, there is disposed a fuel system control unit 20 incorporating therein a microcomputer.

Fuel system control unit 20 receives detection signals from fuel level gauge 13 and tank internal pressure sensor 16.

On the other hand, fuel system control unit 20 outputs control signals to purge control valve 9, cut valve 14, air pump 15 and a relay circuit 11a of fuel pump 11.

Namely, fuel system control unit 20 performs a purge amount control, the leakage diagnosis of the fuel vapor purge system, the detection of the fuel residue in fuel tank 10 and a drive control of fuel pump 11.

Further, fuel system control unit 20, as described later, executes the fail-safe process for turning OFF relay circuit 11a when it detects the vehicle collision.

Separately from fuel system control unit 20, there is disposed an engine control unit 21 incorporating therein a microcomputer.

Fuel system control unit 20 and engine control unit 21 are capable of communicating with each other.

Engine control unit 21 receives detection signals indicating operating conditions of engine 1 from a crank angle sensor, an air flow meter, a water temperature sensor and the like, which are not shown in the figure.

Engine control unit 21 controls the fuel injection by fuel injection valve 4 and the ignition timing by an ignition plug (not shown in the figure), based on the detection signals.

Further, engine control unit 21 receives a detection signal from an airbag sensor unit 22 for operating an airbag, such as a driver's airbag, a curtain airbag or the like.

Then, when engine control unit 21 detects the vehicle collision based on the detection signal from airbag sensor unit 22, it executes the fail-safe process for turning OFF a relay circuit 11b of fuel pump 11.

Relay circuit 11a and relay circuit 11b are connected in series, and such a series circuit is connected to a power supply circuit of fuel pump 11 in series.

Accordingly, only when relay circuit 11a and relay circuit 11b are both ON, the battery power is supplied to fuel pump 11.

Relay circuit 11b controlled by engine control unit 21 is turned ON based on an ON signal of an ignition switch, and is held to be in an ON state when the vehicle collision is net detected.

An ON/OFF control of fuel pump 11 at a normal time is performed by the ON/OFF control of relay circuit 11a by fuel system control unit 20.

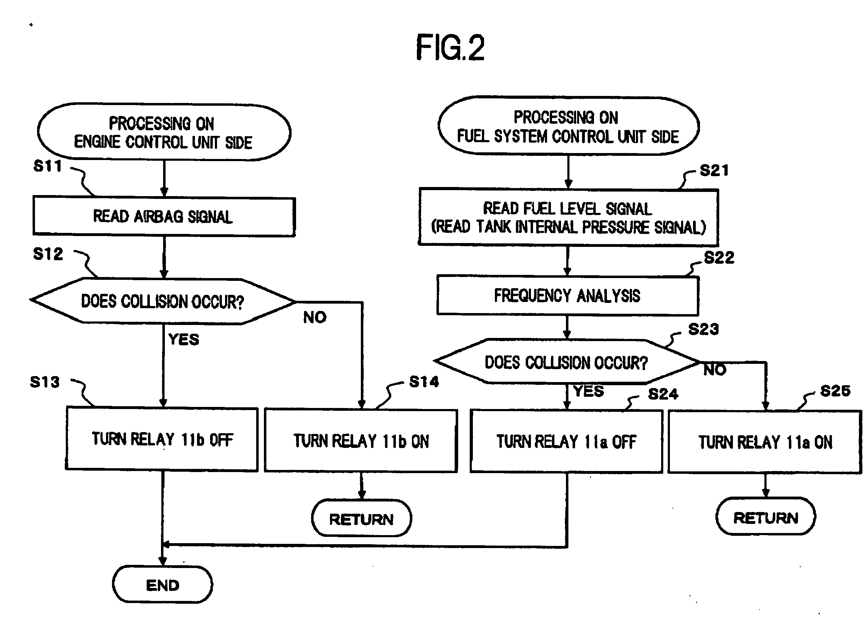

Here, the fail-safe process based on the vehicle collision detection will be described based on a flowchart in Fig. 2.

In the flowchart of Fig. 2, steps S11 to S14 show the processing performed on the side of engine control unit 21, and steps S21 to S25 show the processing performed on the side of fuel system control unit 20.

At first, there will be described the processing performed on the side of engine control unit 21 which per se is not part of the claimed invention.

In step S11, the signal from airbag sensor unit 22 is read.

In step S12, it is judged whether or not the collision accompanying the expansion of the airbag is detected by airbag sensor unit 22.

Then, when the collision is detected by airbag sensor unit 22, control proceeds to step S13.

In step S13, relay circuit 11b is turned OFF, so that the power supply to fuel pump 11 is shut off.

As a result, since an operation of fuel pump 11 is stopped and the fuel supply to engine 1 is stopped, it is possible to suppress at minimum an occurrence of fuel leakage due to the collision.

Incidentally, after relay circuit 11b is turned OFF based on the collision detection, relay circuit 11b is held to be in an OFF state until a key switch is turned OFF. Then, when the key switch is again turned ON, relay circuit 11b is normally turned ON.

On the other hand, when it is judged in step S12 that the collision accompanying the expansion of the airbag is not detected, control proceeds to step S14.

In step S14, relay circuit 11b is normally permitted to be turned ON, and the fuel supply to engine 1 by fuel pump 11 is permitted.

Next, there will be described the processing performed on the side of fuel system control unit 20.

In step S21, the detection signal from fuel level gauge 13 is read.

In step S22, the detection signal from fuel level gauge 13 is frequency analyzed, and it is judged whether or not a signal change peculiar to the collision time occurs.

For example, the detection signal from fuel level gauge 13 is subjected to the fast Fourier transformation, and the transformation result and a previously stored signal characteristic at the collision time are compared with each other using a correlation function or the like, so that it is judged whether or not the transformation result is similar to the signal characteristic at the collision time.

In step S23, it is judged whether or not the signal change peculiar to the collision time is detected as the result of the frequency analysis.

Then, if the signal change peculiar to the collision time is detected, control proceeds to step S24 where relay circuit 11a is turned OFF, so that the power supply to fuel pump 11 is shut off.

Thus, since the operation of fuel pump 11 is stopped and the fuel supply to engine 1 is stopped, it is possible to suppress at minimum the occurrence of fuel leakage due to the collision.

An OFF state of relay circuit 11a based on the collision detection is held until the key switch is turned OFF, similarly to relay circuit 11b. When the key switch is turned OFF and thereafter is again turned ON, a normal control of relay circuit 11a is restored.

On the other hand, when it is judged in step S23 that the signal change peculiar to the collision time is not detected, control proceeds to step S25.

In step S25, relay circuit 11a is normally turned ON so that the fuel supply to engine 1 by fuel pump 11 is performed.

Here, if the collision accompanying the expansion of the airbag is detected based on the signal from airbag sensor unit 22 and also the collision is detected based on the detection signal from fuel level gauge 13, relay circuit 11a and relay circuit 11b are both turned OFF.

Accordingly, even if one of engine control unit 21 and fuel system control unit 20 is failed due to the collision, it is possible to stop the operation of fuel pump 11 by the other control unit which normally operates.

Further, for example in the case where airbag sensor unit 22 responds to only the head-on collision or the lateral collision, since the airbag is not expanded when the backward collision occurs, the fail-safe process for turning OFF relay circuit 11b is not executed on the side of engine control unit 21.

However, in the collision detection based on the detection signal from fuel level gauge 13, since collision directions are not limited, and accordingly, the collision from all directions including the backward collision can be detected, it is possible to stop the operation of fuel pump 11 by the processing on the side of fuel system control unit 20 even at the time of backward collision.

Incidentally, it is possible that, in step S21, in place of reading the detection signal from fuel level gauge 13, the detection signal from tank internal pressure sensor 16 is read, and it is judged whether or not the collision occurs based on whether or not a variation peculiar to the collision time occurs in a pressure signal in fuel tank 10.

A change peculiar to the collision time is shown in the detection signal from tank internal pressure sensor 16, irrespective of the collision directions. Therefore, it is possible to detect the collision from all directions including the backward collision which is not detected by airbag sensor unit 22. Accordingly, in response to the backward collision, relay circuit 11a can be turned OFF.

Further, in place of using the detection signal from fuel level gauge 13 or tank internal pressure sensor 16, it is possible to an acceleration sensor 25 for detecting the collision from at least a direction (for example, backward) which is not detected by airbag sensor unit 22. Then, the setting is made so that fuel system control unit 20 judges based on a detection signal from acceleration sensor 25 whether or not the collision occurs, and when it detects the collision, turns OFF relay circuit 11a, thereby shutting off the power supply to fuel pump 11.

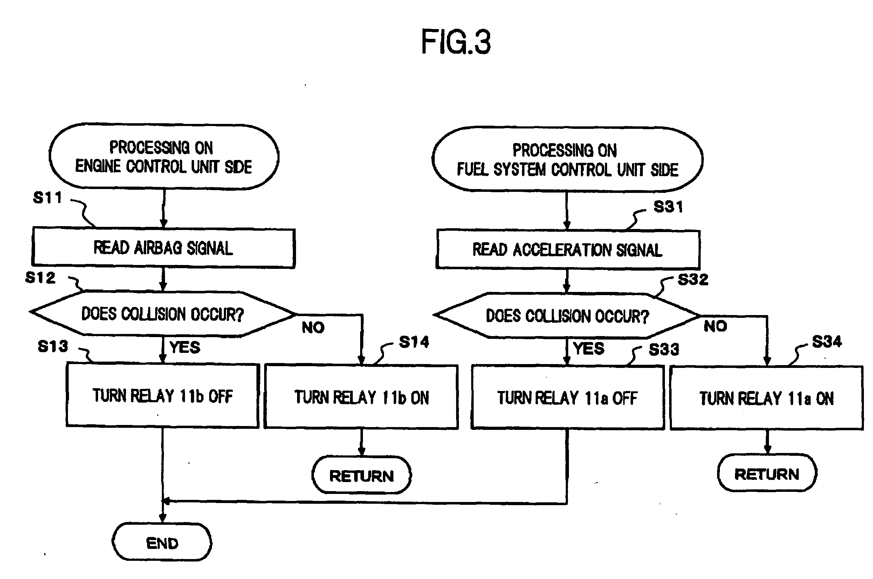

A flowchart in Fig. 3 shows the fall-safe process using acceleration sensor 25 for detecting the backward collision which is not detected by airbag sensor unit 22.

In the flowchart of Fig. 3, in step S31, the detection signal from acceleration sensor 25 is read.

In step S32, it is judged whether or not the read detection signal indicates the acceleration at the collision time.

Then, in the case where the detection signal from acceleration sensor 25 indicates a change at the collision time, control proceeds to step S33.

In step S33, relay circuit 11a is turned OFF to shut off the power supply to fuel pump 11, so that the operation of fuel pump 11 is stopped, to stop the fuel supply to engine 1.

On the other hand, in the case where the detection signal from acceleration sensor 25 does not indicate the change at the collision time, control proceeds to step S34.

In step S34, relay circuit 11a is permitted to be turned ON, and the fuel supply to engine 1 is normally performed.

Note, in a vehicle provided with an electromagnetic rollover valve for automatically preventing the fuel leakage, if fuel system control unit 20 controls the ON/OFF of relay circuit 11a based on an output from the electromagnetic rollover valve, it is possible to suppress the fuel leakage not only at the collision time but also at the rollover time.

In the above embodiment, the operation of fuel pump 11 is stopped at the collision time, to stop the fuel supply to engine 1. However, it is possible to reduce a fuel supply amount to engine 1 to an amount less than a normal fuel supply amount, when the collision is detected.

To be specific, an applied voltage on fuel pump 11 is forcibly reduced at the collision time, or a fuel relief amount is forcibly increased at the collision time if pressure regulator 12 is of an electronically controlled type, so that the fuel supply amount (fuel supply pressure) to engine 1 can be reduced.

Further, the above described collision detection method and the fail-safe process can also be applied to a fuel supply apparatus provided with a low pressure fuel pump and a high pressure fuel pump wherein fuel in a fuel tank is supplied to the high pressure fuel pump by the low pressure fuel pump, and the fuel pressurized by the high pressure fuel pump is supplied to an engine,

Moreover, it is possible to input the detection signal from airbag sensor unit 22 to fuel system control unit 20, or to input the detection signal from airbag sensor unit 22 to fuel system control unit 20 from the side of engine control unit 21 via a communication line.

The setting can be made so that fuel system control unit 20 stops the operation of fuel pump 11 in accordance with the fail-safe process, and also when it detects the collision based on the detection signal from airbag sensor unit 22, stops the operation of fuel pump 11.

Furthermore, the result of collision detection in fuel system control unit 20 based on the detection signal from fuel level gauge 13, tank internal pressure sensor 16 or acceleration sensor 25, is transmitted to engine control unit 21. Then, the setting can be made so that engine control unit 21 stops the operation of fuel pump 11 when the collision is detected in fuel system control unit 20 and/or when the collision is detected in airbag sensor unit 22.

While only selected embodiments have been chosen to illustrate the present invention, it will be apparent to those skilled in the art from this disclosure that various changes and modifications can be made herein without departing from the scope of the invention as defined in the appended claims.

Furthermore, the foregoing description of the embodiments according to the present invention is provided, for illustration only, and not for the purpose of limiting the invention as defined in the appended claims.

## Claims

1. A fuel supply control apparatus for a vehicle engine, comprising:
a first detector (13;16;25) detecting a collision against a vehicle; and
a first limiter (20) limiting the supply of fuel to said engine (1) when the collision is detected by said first detector (13;16;25), said first detector (13; 16; 25) detecting at least the backward collision against the vehicle;
said apparatus **characterized in that**
said first detector (13;16,25) receives a signal indicating a fuel level in a fuel tank (10) which reserves the fuel to be supplied to said engine (1), to detect at least the backward collision against the vehicle based on said fuel level signal.

2. A fuel supply control apparatus for a vehicle engine according to claim 1, **characterized in that** said first detector (13,16,25) detects the collision by the frequency analysis of said fuel level signal.

3. A fuel supply control apparatus for a vehicle engine, comprising:
a first detector (1,16,25) detecting a collision against a vehicle; and
a first limiter (20) limiting the supply of fuel to said engine (1) when the collision is detected by said first detector (13,16,25), said first detector (13; 16; 25) detecting at least the backward collision against the vehicle;
said apparatus **characterized in that**
said first detector (13,16,25) receives a signal indicating a pressure in a fuel tank (10) which reserves the fuel to be supplied to said engine (1), to detect at least the backward collision against the vehicle based on said pressure signal.

4. A fuel supply control apparatus for a vehicle engine according to claim 3, **characterized in that** said first detector (13,16,25) detects the collision by the frequency analysis of said pressure signal.

5. A fuel supply control apparatus for a vehicle according to one of claims 1 to 4, **characterized by**
a second detector (22) detecting the vehicle collision, independently from said first detector (13,16,25); and
a second limiter (21) limiting the supply of the fuel to said engine (1), independently from said first limiter (20), when the collision is detected by said second detector (22).

6. A fuel supply control apparatus for a vehicle engine according to claim 5, **characterized in that** said second detector (22) receives a detection signal from an airbag sensor unit (22), to detect the collision based on said detection signal.

7. A fuel supply control apparatus for a vehicle engine according to one of claims 5 to **6, characterized in that** said first limiter (20) and said second limiter (21) execute the processing of stopping an operation of a fuel pump (11) which supplies the fuel to said engine (1), independently from each other, when the collision is detected.

8. A fuel supply control apparatus for a vehicle engine according to one of claims 5 to **6, characterized in that** said first limiter (20) and second limiter (21) execute the processing of reducing a supply pressure of the fuel to said engine (1), independently from each other, when the collision is detected.

9. A fuel supply control apparatus for a vehicle engine according to one of claims 5 to 6, **characterized by**
a relay circuit (11a, 11b) connected to a power supply circuit of a fuel pump (11) which supplies the fuel to said engine (1), which is formed by connecting a first relay circuit (11a) and a second relay circuit (11b) in series,
wherein said first limiter (20) outputs a signal for breaking said first relay circuit (11a) when the collision is detected by said first detector (13;16;25), and
said second limiter (21) outputs a signal for breaking said second relay circuit (11b) when the collision is detected by said second detector (22).

10. A fuel supply control method for a vehicle engine, comprising the steps of:
detecting at least the backward collision against a vehicle; and
limiting the supply of fuel to said engine (1) by a first limiter (20) when the collision is detected,
said method **characterized in that**
said step of detecting the collision comprises the steps of:
receiving a signal indicating a fuel level in a fuel tank (10) which reserves the fuel to be supplied to said engine (1);
analyzing said fuel level signal; and
judging based on the analysis result of said fuel level signal whether or not the collision occurs.

11. A fuel supply control method for a vehicle engine, comprising the steps of:
detecting at least the backward collision against a vehicle; and
limiting the supply of fuel to said engine (1) by a first limiter (20) when the collision is detected,
said method **characterized in that**
said step of detecting the collision comprises the steps of:
receiving a signal indicating a pressure in a fuel tank (10) which reserves the fuel to be supplied to said engine (1);
analyzing said pressure signal; and
judging based on the analysis result of said pressure signal whether or not the collision occurs.

12. A fuel supply control method for a vehicle engine according to one of claims 10 to 11, **characterized by** said step of:
detecting the collision from directions other than the vehicle backward, independently from said step of detecting the collision,
limiting the supply of the fuel to said engine by a second limiter (21) when the collision from directions other than the vehicle backward is detected.

13. A fuel supply control method for a vehicle engine according to claim 12, **characterized in that** said step of detecting the collision from directions other than the vehicle backward comprises the steps of:
receiving a detection signal from an airbag sensor unit (22); and
detecting the collision based on said detection signal.

14. A fuel supply control method for a vehicle engine according to one of claims 12 to 13, **characterized in that** said first limiter (20) and second limiter (21) execute the processing of stopping an operation of a fuel pump (11) which supplies the fuel to said engine (1), independently from each other, when the collision is detected.

15. A fuel supply control method for a vehicle engine according to one of claims 12 to 13, **characterized in that** said first limiter (20) and second limiter (21) execute the processing of reducing a supply pressure of the fuel to said engine (1), independently from each other, when the collision is detected.

## Patentansprüche

1. Kraftstoffzuführungssteuerungsvorrichtung für einen Fahrzeugmotor, aufweisend:
einen ersten Detektor (13, 16; 25), der eine Kollision gegen ein Fahrzeug erfasst und eine erste Begrenzungseinrichtung (20), die die Zuführung von Kraftstoff zu dem Motor (1) begrenzt, wenn die Kollision durch den ersten Detektor (13, 16; 25) erfasst wird, wobei der erste Detektor (13, 16; 25) zumindest die rückwärtige Kollision gegen das Fahrzeug erfasst;
die Vorrichtung **dadurch gekennzeichnet ist, dass**
der ersten Detektor (13, 16; 25) ein Signal aufnimmt, das das Kraftstoffniveau in einem Kraftstofftank (10) anzeigt, das den zu dem Motor (1) zuzuführenden Kraftstoff beinhaltet, um zumindest die rückwärtige Kollision gegen das Fahrzeug auf der Grundlage des Kraftstoffniveausignals zu erfassen

2. Kraftstoffzuführungssteuerungsvorrichtung für einen Fahrzeugmotor nach Anspruch 1, **dadurch gekennzeichnet, dass** der erste Detektor (13, 16; 25) die Kollision durch die Frequenzanalyse des Kraftstoffniveausignals erfasst.

3. Kraftstoffzuführungssteuerungsvorrichtung für einen Fahrzeugmotor, aufweisend; einen erste Detektor (13, 16; 25), der eine Kollision gegen ein Fahrzeug erfasst; und eine erste Begrenzungseinrichtung (20), die die Kraftstoffzuführung zu dem Motor (1) begrenzt, wenn die Kollision durch den ersten Detektor (13, 16; 25) erfasst wird, wobei der erste Detektor (13, 16; 25) zumindest die rückwärtige Kollision gegen das Fahrzeug erfasst;
wobei die Vorrichtung **dadurch gekennzeichnet ist, dass**
der erste Detektor (13, 16; 25) ein Signal empfängt, das einen Druck in einem Kraftstofftank (10) anzeigt, das den zu dem Motor (1) zuzuführenden Kraftstoff beinhaltet, um zumindest die rückwärtige Kollision gegen das Fahrzeug auf der Grundlage des Kraftstoffniveausignals zu erfassen.

4. Kraftstoffzuführungssteuerungsvorrichtung für einen Fahrzeugmotor nach Anspruch 3, **dadurch gekennzeichnet ist, dass** der erste Detektor (13, 16; 25) die Kollision durch die Frequenzanalyse des Drucksignals erfasst.

5. Kraftstoffzuführungssteuerungsvorrichtung für einen Fahrzeugmotor nach einem der Ansprüche 1 bis 4,
**gekennzeichnet durch**
einen zweiten Detektor (22), der die Fahrzeugkollision unabhängig von dem ersten Detektor (13, 16; 25) erfasst; und
eine zweite Begrenzungseinrichtung (21), die die Kraftstoffzuführung zu dem Motor (1) unabhängig von der ersten Begrenzungseinrichtung (20) begrenzt, wenn die Kollision **durch** den zweiten Detektor (22) erfasst wird.

6. Kraftstoffzuführungssteuerungsvorrichtung für einen Fahrzeugmotor nach Anspruch 5, **dadurch gekennzeichnet, dass** der zweite Detektor (22) ein Erfassungssignal von einer Luftsacksensoreinheit (22) empfängt, um die Kollision auf der Grundlage des Erfassungssignales zu erfassen.

7. Kraftstoffzuführungssteuerungsvorrichtung für einen Fahrzeugmotor nach einem der Ansprüche 5 bis 6, **dadurch gekennzeichnet, dass** die erste Begrenzungseinrichtung (20) und die zweite Begrenzungseinrichtung (21) das Stoppen eines Betriebs der Kraftstoffpumpe (11), die den Kraftstoff zu dem Motor (1) unabhängig voneinander durchzuführen, wenn die Kollision erfasst wird.

8. Kraftstoffzuführungssteuerungsvorrichtung für einen Fahrzeugmotor nach einem der Ansprüche 5 bis 6, **dadurch gekennzeichnet, dass** die erste Begrenzungseinrichtung (20) und die zweite Begrenzungseinrichtung (21) einen Kraftstoffdruck des Kraftstoffes, der zu dem Motor (1) zugeführt wird, unabhängig voneinander ausführen, wenn die Kollision erfasst wird.

9. Kraftstoffzuführungssteuerungsvorrichtung für einen Fahrzeugmotor nach einem der Ansprüche 5 bis 5, **gekennzeichnet durch**
einen Relaisschaltkreis (11a, 11b), verbunden mit einem Energiezuführungsschaltkreis einer Kraftstoffpumpe (11), die den Kraftstoff zu dem Motor (1) zuführt, der **durch** in Reiheverbinden eines ersten Relaisschaltkreises (11a) und eines zweiten Relaisschaltkreises (11b) in Reihe gebildet ist,
wobei die erste Begrenzungseinrichtung (20) ein Signal zum Unterbrechen des ersten Relaisschaltkreises (11a) ausgibt, wenn die Kollision **durch** den ersten Detektor (13, 16; 25) erfasst wird, und
die zweite Begrenzungseinrichtung (21) ein Signal zum Unterbrechen des zweiten Relaisschaltkreises (11b) ausgibt, wenn die Kollision **durch** den zweiten Detektor (22) erfasst wird.

10. Kraftstoffzuführungssteuerverfahren für einen Fahrzeugmotor, aufweisend die Schritte von:
Erfassen von zumindest der rückwärtigen Kollision gegen ein Fahrzeug; und
Begrenzen der Kraftstoffzuführung zu dem Motor (1) durch eine erste Begrenzungseinrichtung (20), wenn die Kollision erfasst wird,
wobei das Verfahren **dadurch gekennzeichnet ist, dass**
der Erfassungsschritt der Kollision die Schritte aufweist, von:
Aufnehmen eines Signals, das das Kraftstoffniveau in einem Kraftstofftank (10) anzeigt, der den zu dem Motor (1) zuzuführenden Kraftstoff beinhaltet; Analysieren des Kraftstoffniveausignals; und
Bewerten auf der Grundlage der Analyseergebnisse des Kraftstoffniveausignals, ob die Kollision auftritt, oder nicht.

11. Kraftstoffzuführungssteuerverfahren für einen Fahrzeugmotor, aufweisend die Schritte von:
Erfassen von zumindest einer rückwärtigen Kollision gegen ein Fahrzeug; und
Begrenzen der Kraftstoffzuführung zu dem Motor (1) durch eine Begrenzungseinrichtung (20), wenn die Kollision erfasst wird,
wobei das Verfahren, **dadurch gekennzeichnet ist, dass**
der Schritt der Erfassung der Kollision die Schritte aufweist von:
Empfangen eines Signales, dass einen Druck in einem Kraftstofftank (10) anzeigt, der den zu dem Motor (1) zuzuführenden Kraftstoff enthält;
Analysieren des Drucksignales; und
Bewerten auf der Grundlage der Analyseergebnisse des Drucksignals, ob die Kollision auftritt, oder nicht.

12. Kraftstoffzuführungssteuerverfahren für einen Fahrzeugmotor nach einem der Ansprüche 10 bis 11, **gekennzeichnet durch** die Schritte von:
Erfassen der Kollision aus Richtungen, die anders als die rückwärtige des Fahrzeuges ist, unabhängig von dem Schritt der Erfassung der Kollision,
Begrenzen der Kraftstoffzuführung zu dem Motor **durch** die zweite Begrenzungseinrichtung (21), wenn die Kollision aus Richtungen, die anders als die rückwärtige des Fahrzeuges sind, erfasst wird.

13. Kraftstoffzuführungssteuerverfahren für einen Fahrzeugmotor nach Anspruch 12, **dadurch gekennzeichnet, dass** der Schritt der Erfassung der Kollision aus den Richtungen, die anders als die rückwärtige des Fahrzeuges ist, die Schritte aufweist, von:
Empfangen eines Erfassungssignals von der Luftsacksensoreinheit (22); und
Erfassen der Kollision auf der Grundlage des Erfassungssignals.

14. Kraftstoffzuführungssteuerverfahren für einen Fahrzeugmotor nach einem der Ansprüche 12 bis 13, **dadurch gekennzeichnet, dass** die erste Begrenzungseinrichtung (20) und die zweite Begrenzungseinrichtung (21) das Verarbeiten des Stoppens eines Betriebs der Kraftstoffpumpe (11), die den Kraftstoff zu dem Motor (1) zuführt, unabhängig voneinander ausführen, wenn die Kollision erfasst wird.

15. Kraftstoffzuführungssteuerverfahren für einen Fahrzeugmotor nach einem der Ansprüche 12 bis 13, **dadurch gekennzeichnet, dass** die erste Begrenzungseinrichtung (20) und die zweite Begrenzungseinrichtung (21) das Verarbeiten des Reduzierens eines Zuführungsdruckes des Kraftstoffes zu dem Motor (1) unabhängig voneinander ausführen, wenn die Kollision erfasst wird.

## Revendications

1. Dispositif de commande d'alimentation en carburant destiné à un moteur automobile, comprenant :
un premier détecteur (13 ; 16 ; 25) détectant une collision contre un véhicule ; et
un premier limiteur (20) limitant l'alimentation en carburant dudit moteur (1) lorsque la collision est détectée par ledit premier détecteur (13 ; 16 ; 25), ledit premier détecteur (13 ; 16 ; 25) détectant au moins la collision arrière contre le véhicule ;
ledit dispositif étant **caractérisé en ce que**
ledit premier détecteur (13 ; 16 ; 25) reçoit un signal indiquant un niveau de carburant dans un réservoir de carburant (10) qui réserve le carburant à fournir audit moteur (1), afin de détecter au moins la collision arrière contre le véhicule sur la base dudit signal de niveau de carburant.

2. Dispositif de commande d'alimentation en carburant destiné à un moteur automobile selon la revendication 1 ; **caractérisé en ce que** ledit premier détecteur (13, 16, 25) détecte la collision par l'analyse de fréquence dudit signal de niveau de carburant.

3. Dispositif de commande d'alimentation en carburant destiné à un moteur automobile, comprenant :
un premier détecteur (1, 16, 25) détectant une collision contre un véhicule ; et
un premier limiteur (20) limitant l'alimentation en carburant dudit moteur (1) lorsque la collision est détectée par ledit premier détecteur (13, 16, 25), ledit premier détecteur (13 ; 16 ; 25) détectant au moins la collision arrière contre le véhicule ;
ledit dispositif étant **caractérisé en ce que**
ledit premier détecteur (13, 16, 25) reçoit un signal indiquant une pression dans un réservoir de carburant (10) qui réserve le carburant à fournir audit moteur (1), afin de détecter au moins la collision arrière contre le véhicule sur la base dudit signal de pression.

4. Dispositif de commande d'alimentation en carburant destiné à un moteur automobile selon la revendication 3, **caractérisé en ce que** ledit premier détecteur (13, 16, 25) détecte la collision par l'analyse de fréquence dudit signal de pression.

5. Dispositif de commande d'alimentation en carburant destiné à un moteur automobile selon l'une des revendications 1 à 4, **caractérisé par**
un second détecteur (22) détectant la collision avec le véhicule, indépendamment dudit premier détecteur (13, 16, 25) ; et
un second limiteur (21) limitant l'alimentation en carburant dudit moteur (1), indépendamment dudit premier limiteur (20), lorsque la collision est détectée par ledit second détecteur (22).

6. Dispositif de commande d'alimentation en carburant destiné à un moteur automobile selon la revendication 5, **caractérisé en ce que** ledit second détecteur (22) reçoit un signal de détection de la part d'une unité de capteur d'airbag (22), afin de détecter la collision sur la base dudit signal de détection.

7. Dispositif de commande d'alimentation en carburant destiné à un moteur automobile selon l'une des revendications 5 à 6, **caractérisé en ce que** ledit premier limiteur (20) et ledit second limiteur (21) exécutent le traitement consistant à arrêter le fonctionnement d'une pompe à carburant (11) qui fournit le carburant audit moteur (1), indépendamment l'un de l'autre, lorsque la collision est détectée.

8. Dispositif de commande d'alimentation en carburant destiné à un moteur automobile selon l'une des revendications 5 à 6, **caractérisé en ce que** ledit premier limiteur (20) et le second limiteur (21) exécutent le traitement consistant à réduire une pression d'alimentation en carburant dudit moteur (1), indépendamment l'un de l'autre, lorsque la collision est détectée.

9. Dispositif de commande d'alimentation en carburant destiné à un moteur automobile selon l'une des revendications 5 à 6, **caractérisé par**
un circuit de relais (11a, 11b) relié à un circuit d'alimentation électrique d'une pompe à carburant (11) qui fournit le carburant audit moteur (1), qui est formé en reliant un premier circuit de relais (11a) et un second circuit de relais (11b) en série,
dans lequel ledit premier limiteur (20) transmet un signal destiné à couper ledit premier circuit de relais (11a) lorsque la collision est détectée par ledit premier détecteur (13 ; 16 ; 25), et
ledit second limiteur (21) transmet un signal destiné à couper ledit second circuit de relais (11b) lorsque la collision est détectée par ledit second détecteur (22).

10. Procédé de commande d'alimentation en carburant destiné à un moteur automobile, comprenant les étapes consistant à :
détecter au moins la collision arrière contre un véhicule ; et
limiter l'alimentation en carburant dudit moteur (1) par un premier limiteur (20) lorsque la collision est détectée,
ledit procédé étant **caractérisé en ce que**
ladite étape de détection de la collision comprend les étapes consistant à :
recevoir un signal indiquant un niveau de carburant dans un réservoir de carburant (10) qui réserve le carburant à fournir audit moteur (1) ;
analyser ledit signal de niveau de carburant ; et
juger, sur la base du résultat de l'analyse dudit signal de niveau de carburant, si la collision a lieu ou non.

11. Procédé de commande d'alimentation en carburant destiné à un moteur automobile, comprenant les étapes consistant à :
détecter au moins la collision arrière contre un véhicule ; et
limiter l'alimentation en carburant dudit moteur (1) par un premier limiteur (20) lorsque la collision est détectée,
ledit procédé étant **caractérisé en ce que**
ladite étape de détection de la collision comprend les étapes consistant à :
recevoir un signal indiquant une pression dans un réservoir de carburant (10) qui réserve le carburant à fournir audit moteur (1) ;
analyser ledit signal de pression ; et
juger, sur la base du résultat de l'analyse dudit signal de pression, si la collision a lieu ou non.

12. Procédé de commande d'alimentation en carburant destiné à un moteur automobile selon l'une des revendications 10 à 11, **caractérisé par** les étapes consistant à :
détecter la collision provenant de directions autres que l'arrière du véhicule, indépendamment de ladite étape de détection de la collision,
limiter l'alimentation en carburant dudit moteur par un second limiteur (21) lorsque la collision provenant de directions autres que l'arrière du véhicule est détectée.

13. Procédé de commande d'alimentation en carburant destiné à un moteur automobile selon la revendication 12, **caractérisé en ce que** ladite étape de détection de la collision provenant de directions autres que l'arrière du véhicule comprend les étapes consistant à :
recevoir un signal de détection de la part d'une unité de capteur d'airbag (22) ; et
détecter la collision sur la base dudit signal de détection.

14. Procédé de commande d'alimentation en carburant destiné à un moteur automobile selon l'une des revendications 12 à 13, **caractérisé en ce que** ledit premier limiteur (20) et le second limiteur (21) exécutent le traitement consistant à arrêter un fonctionnement d'une pompe à carburant (11) qui fournit le carburant audit moteur (1), indépendamment l'un de l'autre, lorsque la collision est détectée.

15. Procédé de commande d'alimentation en carburant destiné à un moteur automobile selon l'une des revendications 12 à 13, **caractérisé en ce que** ledit premier limiteur (20) et le second limiteur (21) exécutent le traitement consistant à réduire une pression d'alimentation en carburant dudit moteur (1), indépendamment l'un de l'autre, lorsque la collision est détectée.
